# EUROPEAN PATENT APPLICATION

(11) **EP 2 246 713 A1**
(43) Date of publication of application: **03.11.2010**
(21) Application number: 09714559.3
(22) Date of filing: 03.02.2009
(51) Int. Cl.: G01T 3/00, G01N 23/04, G01N 27/62, G01T 1/167, G01T 1/18, G01T 1/29

(54) **NUCLEAR MATERIAL DETECTION DEVICE, NUCLEAR MATERIAL INSPECTION SYSTEM, AND CLEARANCE DEVICE**

(30) Priority: 25.02.2008 JP 2008043620
(71) Applicant: Mitsubishi Heavy Industries, Ltd., Tokyo 108-8215 (JP)
(72) Inventor: ITOU, Takehiko, Yokohama-shi Kanagawa 236-8515 (JP); IWAMURA, Yasuhiro, Yokohama-shi Kanagawa 236-8515 (JP); NUKATSUKA, Shigehiro, Tokyo 108-8215 (JP); TAKAHASI, Hiroyuki, Tokyo 113-8656 (JP)
(74) Representative: HOFFMANN EITLE
(86) International application number: PCT/JP2009/051794
(87) International publication number: WO 2009/107464

(57) **Abstract**

A nuclear material detection device that can detect a nuclear material with high accuracy is provided. The nuclear material detection device (10) detects a nuclear material contained in an object under inspection A to be inspected. A neutron detection sensor (1) is disposed so as to oppose the object under inspection A and detects neutrons emitted from the nuclear material. The neutron detection sensor (1) can detect the two-dimensional position of the source of neutrons emitted from the nuclear material.

## Description

### Technical Field

The present invention relates to a nuclear material detection device having a neutron detection sensor that detects neutrons emitted from a nuclear material, a nuclear material inspection system having the same, and a clearance device.

### Background Art

As a preventive measure against terrorism using nuclear bombs (nuclear materials), there is a demand for a method for accurately and efficiently inspecting for a nuclear bomb in baggage.
As a method for detecting the presence of a nuclear material in an object under inspection, a method for detecting gamma rays emitted from a nuclear material (a so-called ³He counter) is known (see Patent Citation 1).

Patent Citation 1:
Japanese Unexamined Patent Application, Publication No. 2007-187467 (paragraph [0027] and FIG. 3)

### Disclosure of Invention

However, because gamma ray emission from uranium and plutonium is relatively low, signals derived therefrom are weak. Thus, there is a problem with detection accuracy.
Although a conventional ³He counter can detect the presence/absence of gamma rays, it cannot identify the two-dimensional position thereof.

The present invention has been made in view of the above-described situation, and an object thereof is to provide a nuclear material detection device capable of detecting a nuclear material with high accuracy, a nuclear material inspection system, and a clearance device.

In order to solve the above-described problems, a nuclear material detection device, nuclear material inspection system, and clearance device of the present invention employ the following solutions.
That is, a nuclear material detection device according to one aspect of the present invention detects a nuclear material contained in an object under inspection to be inspected. The nuclear material detection device includes a neutron detection sensor that is disposed so as to oppose the object under inspection and detects neutrons emitted from the nuclear material. The neutron detection sensor can detect the two-dimensional position of the source of the neutrons emitted from the nuclear material.

Because the neutron detection sensor that can detect the two-dimensional position of the source of neutrons emitted from a nuclear material is provided, it is possible to identify the two-dimensional position of the nuclear material contained in the object under inspection. Thus, the accuracy of detecting a nuclear material can be improved.
Typically, the neutron detection sensor has a planar shape having larger dimensions in the longitudinal direction and width direction than the thickness direction so that it can measure the two-dimensional position.
Herein, the "two-dimensional position" means, for example, the position of the object under inspection in the longitudinal direction and the width direction.
Because the neutron detection sensor detects neutrons, no shield made of lead or the like is required as in the case of detecting gamma rays. Thus, the device can be achieved with a light, simple configuration.
Because the neutrons to be detected are scarce in nature, a problem of deterioration in detection accuracy caused by the background, which occurs in gamma-ray detection, does not occur. Because the neutrons have higher penetrating power than gamma rays, the detection accuracy can be further improved.
Possible nuclear materials are materials that undergo spontaneous fission, and typical examples thereof include plutonium and uranium.

In the nuclear material detection device according to one aspect of the present invention, the neutron detection sensor can be brought toward and away from the object under inspection.

By bringing the neutron detection sensor toward and away from the object under inspection, the neutron detection sensor can be placed at a suitable position for detecting neutrons, thus improving the inspection accuracy.

In the nuclear material detection device according to one aspect of the present invention, the object under inspection is a piece of baggage, and the neutron detection sensor is provided on a baggage inspection table on which the baggage is placed.

By providing the neutron detection sensor on the baggage inspection table, it is possible to detect a nuclear material existing in the baggage.
Such nuclear material detection devices are suitable to be installed in, for example, entrances of public office buildings, airports, airport customs, hotel lobbies, nuclear power plants, and entrances/exits of radiation controlled areas.

A nuclear material inspection system according to one aspect of the present invention includes an X-ray inspection device that inspects the object under inspection using an X-ray image obtained by irradiating the object under inspection with X-rays, and the nuclear material detection device that inspects the object under inspection inspected by the X-ray inspection device.

Because nuclear materials have large mass numbers, they are indicated with emphasis (for example, with a darker color) compared to the other area in X-ray images. Therefore, the position where the nuclear material is predicted to be present can be identified with the X-ray inspection device. Then, by collating the position where the nuclear material is predicted to be present with the two-dimensional position of the neutron source obtained by the nuclear material detection device, the presence and position of the nuclear material can be obtained with high reliability.
In order to accurately associate the position identified by the X-ray inspection device with the position identified by the nuclear material detection device, it is preferable that the X-ray inspection device and the nuclear material detection device each be provided with a positioning device for positioning the object under inspection at a fixed position.

The nuclear material inspection system according to one aspect of the present invention includes a mass spectrometer that detects a hazardous substance emitted from the object under inspection.

By inspecting for a hazardous substance, such as an explosive, emitted from the object under inspection using the mass spectrometer, a hazardous substance, such as an explosive, contained in the object under inspection can also be detected.
The above-described aspect is particularly advantageous for inspection for dirty bombs containing radioactive materials.

A clearance device according to one aspect of the present invention includes a clearance inspection device that detects gamma rays emitted from the object under inspection, and the nuclear material detection device that inspects the object under inspection inspected by the clearance inspection device.

The clearance device that detects the radioactivity of a radioactive contaminant determines the extent of radioactive contamination by detecting gamma rays emitted therefrom. However, because the gamma ray detection is affected by gamma rays from the background, the inspection accuracy is limited. In the above-described aspect, because the object under inspection inspected by the clearance inspection device is further inspected for the presence/absence of neutron emission by the above-described nuclear material detection device, the accuracy of clearance inspection can be improved.

According to the nuclear material detection device of the present invention, because the neutron detection sensor that can detect the two-dimensional position of the source of neutrons emitted from a nuclear material is provided, it is possible to identify the two-dimensional position of the nuclear material contained in the object under inspection. Thus, the accuracy of detecting a nuclear material can be improved.
According to the nuclear material inspection system of the present invention, because the X-ray inspection device is used in combination with the nuclear material detection device having the neutron detection sensor, it is possible to detect the nuclear material and to identify the two-dimensional position thereof with high reliability.
According to the clearance device of the present invention, because the clearance inspection device that performs gamma-ray detection is used in combination with the nuclear material detection device having the neutron detection sensor, accurate clearance inspection is possible.

### Brief Description of Drawings

[FIG. 1A] FIG. 1A shows a neutron detection sensor used in a nuclear material detection device of the present invention.
[FIG. 1B] FIG. 1B is an enlarged view showing a sensor part of a neutron detection sensor.
[FIG. 2] PIG. 2 is a schematic perspective view of the nuclear material detection device.
[FIG. 3] PIG. 3 is a second embodiment of the present invention showing a front view of a baggage inspection device.
[FIG. 4A] FIG. 4A is a schematic plan view of the baggage inspection device in FIG. 3.
[FIG. 4B] PIG. 4B shows an output image from a neutron detection sensor.
[FIG. 5] FIG. 5 is a perspective view showing a modification.
[FIG. 6] FIG. 6 is a third embodiment of the present invention showing a schematic view of a nuclear material detection system having an X-ray detector.
[FIG. 7] FIG. 7 is a fourth embodiment of the present invention showing a schematic view of a nuclear material detection system having a mass spectrometer.
[FIG. 8] FIG. 8 is a fifth embodiment of the present invention showing a schematic view of a clearance device.

### Explanation of Reference:

- 1:: neutron detection sensor
- 10:: nuclear material detection device
- 20:: baggage inspection device
- 22:: baggage inspection table
- 30:: nuclear material inspection system
- 34:: X-ray inspection device
- 40:: nuclear material inspection system
- 42:: mass spectrometer
- 50:: clearance device
- 51:: clearance inspection device
- A:: object under inspection
- B:: baggage (object under inspection)
- C:: waste (object under inspection)
- n:: neutron

### Best Mode for Carrying Out the Invention

Embodiments of the present invention will be described below with reference to the drawings.

### First Embodiment

A first embodiment of the present invention will be described below using the drawings.

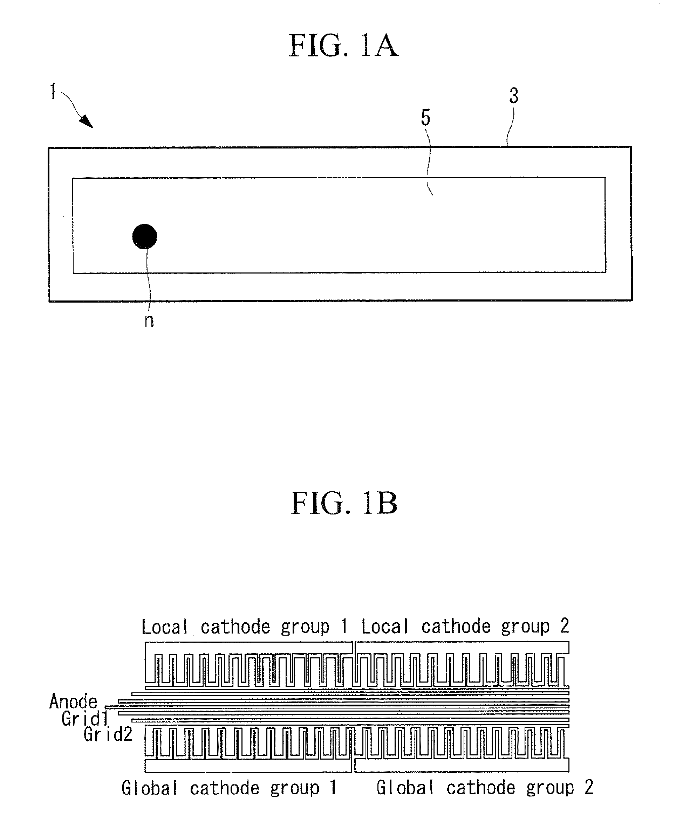

FIG. 1A shows a neutron detection sensor 1 used in a nuclear material detection device of the present invention.

The neutron detection sensor 1 includes a case 3 and a sensor body 5 disposed in the case 3. The case 3 is filled with ³He having a pressure of about several atmospheres.
The sensor body 5 employed is a position-sensitive array sensor. The position-sensitive array sensor employed is one that is disclosed in Nuclear Instruments and Methods in Physics Research A 580 (2007), 1119-1122 (Non-Patent Citation). FIG. 1B shows an enlarged view of a sensor (MSGC: Microstrip Gas Counter) disclosed in the aforementioned Non-Patent Citation. This sensor has an elongated shape extending in the longitudinal direction. By two-dimensionally disposing a number of elongated sensors on a plane in parallel arrangement, the two-dimensional position can be identified.

In the neutron detection sensor 1, the incidence of a neutron n causes an n(³He,t)p reaction, and the sensor body 5 detects a p (proton) at the reaction position. That is, the neutron detection sensor can detect the presence/absence of neutrons from a nuclear material that undergoes spontaneous fission, such as plutonium or uranium, and can detect the two-dimensional position of the source of neutrons.

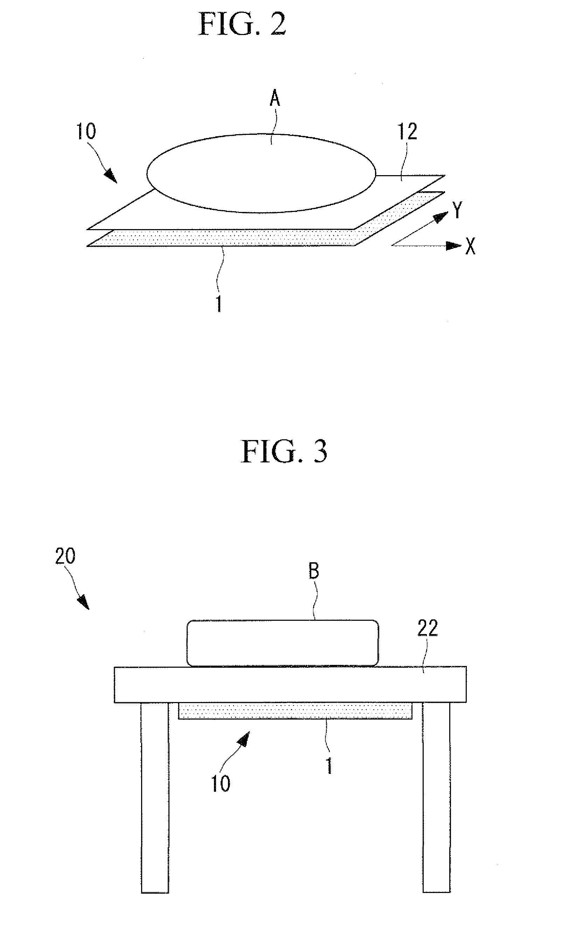

FIG. 2 shows a nuclear material detection device 10 using the neutron detection sensor 1 shown in FIG. 1.
The nuclear material detection device 10 has a table 12 on which an object under inspection A is placed. The neutron detection sensor 1 is disposed on the lower surface of the table 12. The neutron detection sensor 1 is formed in a planar shape having larger dimensions in the longitudinal direction X and width direction Y than the thickness and has a size substantially sufficient to cover the entirety of the object under inspection A.
If a nuclear material is present in the object under inspection A placed on the table 12, the neutrons emitted from the nuclear material are incident on the neutron detection sensor 1. Thus, the two-dimensional position and detection intensity of the neutron source can be obtained. The likelihood of a nuclear material existing in the object under inspection A is estimated from this detection intensity of the neutron source, and the position of the nuclear material in the object under inspection A can be identified from the two-dimensional position of the neutron source.
In this embodiment, because neutrons, which are scarce in nature, are detected, the problem of deterioration in detection accuracy caused by the background, which occurs in gamma-ray detection, does not occur.

### Second Embodiment

Next, a second embodiment of the present invention will be described. This embodiment is a case where the nuclear material detection device described in the first embodiment is used as a baggage inspection device. Thus, the same components as in the first embodiment are denoted by the same reference numerals, and descriptions thereof will be omitted.
FIG. 3 shows a schematic configuration in which the nuclear material detection device 10 having the neutron detection sensor 1 is used as a baggage inspection device 20. The baggage inspection device 20 includes a baggage inspection table 22 on which a piece of baggage (object under inspection) B is placed and a baggage inspection table 20.

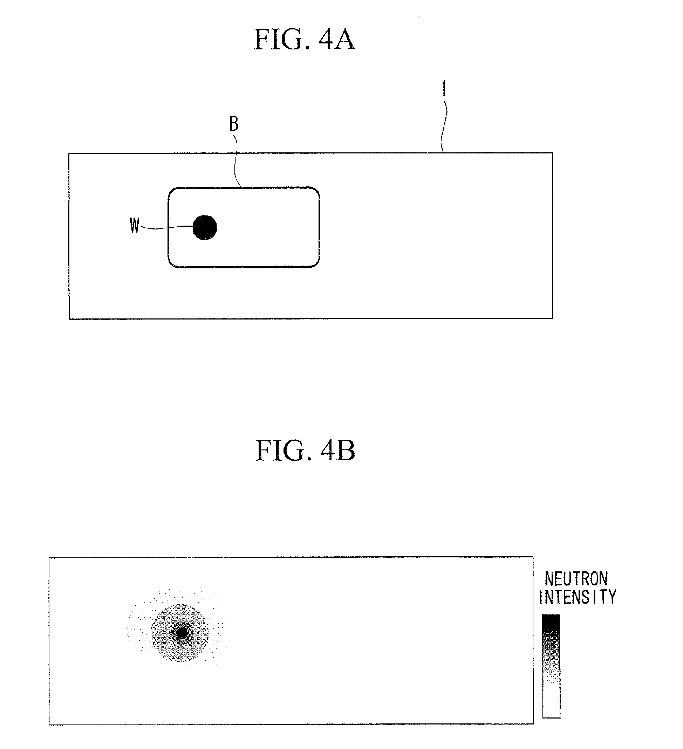

FIG. 4A is a plan view of FIG. 3, showing the positional relationship between the neutron detection sensor 1 and the baggage B. As can be seen from the figure, the neutron detection sensor 1 is formed in a planar shape and is sufficiently larger than the baggage B so that it can be used for the baggage B of various sizes.
FIG. 4B shows an image of an output result obtained from the neutron detection sensor 1 with the same field of view as FIG. 4A. As can be seen from the figure, the position of a nuclear material W (a neutron source, see FIG. 4A) in the baggage B is two-dimensionally identified and is shown with a predetermined intensity distribution. In the figure, the neutron density is higher for shades approaching black.

As has been described, this embodiment makes it possible to identify the two-dimensional position of the nuclear material W in the baggage B. The likelihood of the nuclear material W existing can be estimated from the obtained detection intensity. That is, as in FIG. 4B, when a detection intensity with a strong peak at a predetermined position is obtained, the likelihood of the nuclear material W existing can be estimated to be high.

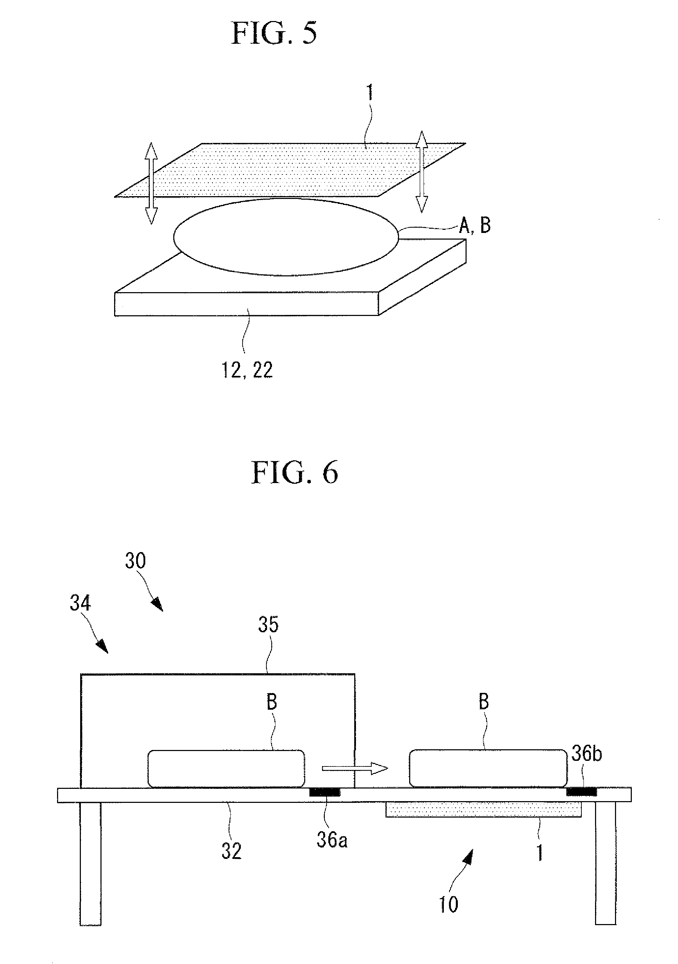

Although the configuration in which the neutron detection sensor 1 is disposed below the table 12 and the baggage inspection table 22 has been described in the first embodiment and the second embodiment, it may be disposed above the object under inspection A or B, as shown in FIG. 5. The neutron detection sensor 1 may be brought toward and away from the object under inspection A or B. By bringing the neutron detection sensor 1 toward and away from the object under inspection in this manner, the neutron detection sensor 1 can be placed at a suitable position for detection, thus improving the neutron detection accuracy.

### Third Embodiment

Next, a third embodiment of the present invention will be described. This embodiment is a nuclear material inspection system in which the nuclear material detection device described in the first embodiment is used in combination with an X-ray inspection device. Thus, the same components as in the first embodiment are denoted by the same reference numerals, and descriptions thereof will be omitted.
As shown in FIG. 6, a nuclear material inspection system 30 includes a table 32, an X-ray inspection device 34, and the nuclear material detection device 10.
The X-ray inspection device 34 irradiates the baggage B with X-rays and obtains an X-ray image. The X-ray inspection device 34 has a cover 35 made of lead to prevent radioactivity from leaking outside. Although not shown in the figure, the X-ray inspection device 34 has image output means that outputs an X-ray image to a control device and a display device that displays the X-ray image.

The nuclear material detection device 10 has the neutron detection sensor 1. The neutron detection sensor is provided on the lower surface of the table 32. The detection output of the neutron detection sensor 1 is transmitted to the control device (not shown).

The table 32 has a conveyor (conveying means) (not shown) and conveys the baggage B from the X-ray inspection device 34 side to the nuclear material detection device 10 side. The conveyor is driven by an instruction from the control device (not shown).
The table 32 has position detection sensors 36a and 36b provided at a downstream end position of the X-ray detection device 34 and at a downstream end position of the nuclear material detection device 10, respectively. These position detection sensors 36a and 36b output detection signals to the control device upon arrival of the baggage B, and the control device, upon receiving the detection signals, stops the conveyor.

The nuclear material inspection system 30 having the above-described configuration is used as follow.
On the upstream side of the X-ray detection device 34, the baggage B to be inspected is placed on the table 32. Next, the conveyor of the table 32 is driven by an instruction from the control device to send the baggage B into the X-ray inspection device 34. When the position detection sensor 36a detects the arrival of the baggage B, the conveyor is stopped by an instruction from the control device. At this position, the baggage is inspected by the X-ray inspection device 34. That is, the baggage B is irradiated with X-rays, and an X-ray image is obtained. Because nuclear materials have large mass numbers, if a nuclear material is present in the baggage B, it is indicated with a darker color (that position is emphasized) than the other area in the X-ray image. This image is displayed on the display device and is transmitted to the control device.

Once the inspection with the X-ray inspection device 34 is finished, the conveyor is driven again by an instruction from the control device, and the baggage B is guided to the nuclear material detection device 10. When the position detection sensor 36b detects the arrival of the baggage B, the conveyor is stopped by an instruction from the control device. At this position, the baggage B is inspected by the nuclear material detection device 10. If a nuclear material is present in the baggage B, a position where the neutron density is locally high is identified as two-dimensional position information, as shown in FIG. 4B. This inspection result is output to the control device and is collated with the X-ray image having been received in advance. Thus, the presence/absence of the nuclear material and the position thereof are identified.

In this embodiment, the position of the nuclear material can be predicted by the X-ray inspection device 34 and can be examined together with the detection result obtained by the nuclear material detection device 10 that identifies the position of the nuclear material utilizing neutron emission. Thus, it is possible to obtain the presence and position of the nuclear material with high accuracy.
The X-ray inspection and the nuclear material inspection are performed after the conveyor is stopped to position the baggage B, that is, in each of the X-ray detection device 34 and the nuclear material detection device 10, the baggage B is always stopped at a fixed position for measurement. This makes it possible to collate the detection result of the X-ray detection device 34 with the detection result of the nuclear material detection device 10 with high positional accuracy, improving the accuracy of detecting the nuclear material.

### Fourth Embodiment

Next, a fourth embodiment of the present invention will be described. In this embodiment, a mass spectrometer is further added to the third embodiment. Thus, the same components as in the first embodiment and the third embodiment are denoted by the same reference numerals, and descriptions thereof will be omitted.

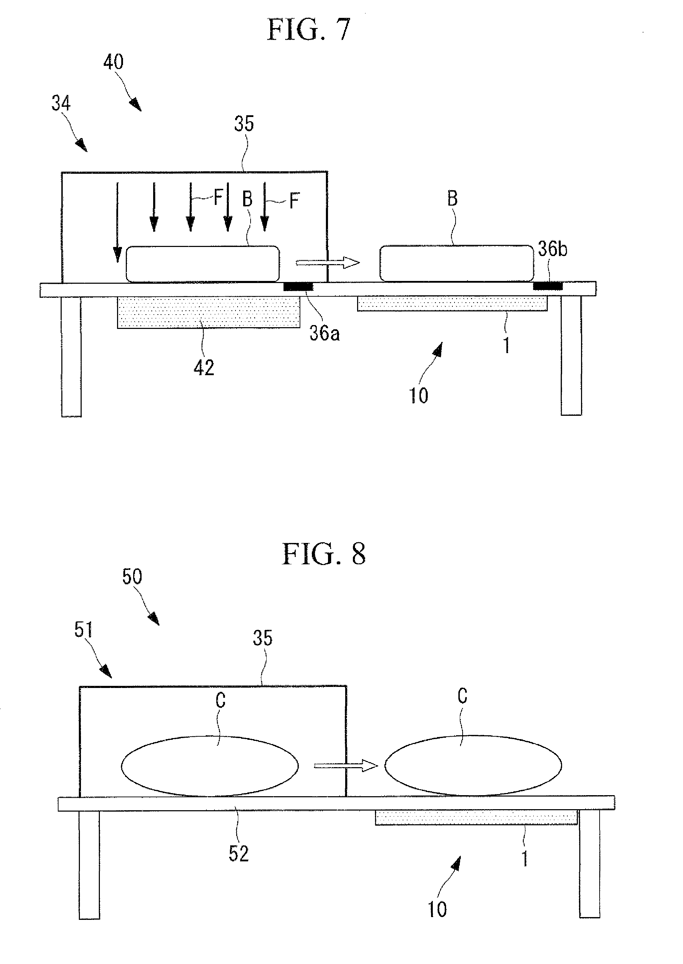

FIG. 7 shows a nuclear material inspection system 40 according to this embodiment. A mass spectrometer 42 is provided below the X-ray inspection device 34. A blower (not shown) is provided in the cover 35 of the X-ray inspection device 34 so that the baggage B goes through an air shower, as shown by arrows F in the figure. Because the mass spectrometer 42 is disposed at a position downstream of the baggage B with respect to the air shower F, various materials emitted from the baggage B are guided to the mass spectrometer 42.

The mass spectrometer 42 performs mass spectrometry of the nuclear material guided by the air shower F to determine whether or not a material regarded as a hazardous substance (such as an explosive) is present. The mass spectrometer 42A may be one disclosed in, for example, Japanese Unexamined Patent Application, Publication No. 2002-170517. More specifically, ionization means that ionizes sample gas using vacuum-ultraviolet light, an ion trap that captures ions of a hazardous substance having a specific mass from the ions ionized by the vacuum-ultraviolet light, and time-of-flight mass spectrometry means that accelerates ions trapped in the ion trap to identify a chemical substance having a specific mass in the sample gas on the basis of the time of flight of the accelerated ions are provided.
As has been described, in this embodiment, by inspecting for a hazardous substance, such as an explosive, emitted from the baggage B using the mass spectrometer 42, a hazardous substance, such as an explosive, contained in the baggage B can also be detected.
This embodiment is particularly effective in inspection for dirty bombs containing radioactive materials.

### Fifth Embodiment

Next, a fifth embodiment of the present invention will be described. This embodiment is a nuclear material inspection system in which the nuclear material detection device described in the first embodiment is used in combination with a clearance device. Thus, the same components as in the first embodiment are denoted by the same reference numerals, and descriptions thereof will be omitted.
As is shown in FIG. 8, a clearance device 50 according to this embodiment has a table 52, a clearance inspection device 51, and the nuclear material detection device 10.
The clearance inspection device 51 measures the radioactivity level of waste C that might be contaminated with radioactivity. More specifically, by detecting gamma rays emitted from the waste C, the extent of radioactive contamination is determined.
The table 52 has a conveyor (conveying means) (not shown) and conveys the waste C from the clearance inspection device 51 side to the nuclear material detection device 10 side. The conveyor is driven by an instruction from a control device (not shown). Similarly to the third embodiment, the table 52 may be provided with position detection sensors to position the waste C.
The nuclear material detection device 10 has the neutron detection sensor 1. The neutron detection sensor is provided on the lower surface of the table 52. The detection output of the neutron detection sensor 1 is transmitted to the control device (not shown).

In the clearance device 50 according to this embodiment, the clearance inspection device 51 determines the extent of the radioactive contamination by means of gamma-ray detection, and in addition, the nuclear material detection device 10 examines the neutron density.
As has been described, in this embodiment, the extent of radioactive contamination can be examined not only by the clearance inspection device 51 whose detection accuracy is deteriorated because of the influence of gamma rays from the background, but also by the nuclear material detection device that detects neutrons whereby the influence of the background is almost negligible. Thus, the accuracy of clearance inspection can be improved.

## Claims

1. A nuclear material detection device that detects a nuclear material contained in an object under inspection to be inspected, the nuclear material detection device comprising a neutron detection sensor that is disposed so as to oppose the object under inspection and detects neutrons emitted from the nuclear material,
wherein the neutron detection sensor can detect the two-dimensional position of the source of the neutrons emitted from the nuclear material.

2. The nuclear material detection device according to claim 1,
wherein the neutron detection sensor can be brought toward and away from the object under inspection.

3. The nuclear material detection device according to claim 1 or 2,
wherein the object under inspection is a piece of baggage, and
wherein the neutron detection sensor is provided on a baggage inspection table on which the baggage is placed.

4. A nuclear material inspection system comprising:
an X-ray inspection device that inspects the object under inspection using an X-ray image obtained by irradiating the object under inspection with X-rays; and
the nuclear material detection device according to any one of claims 1 to 3, which inspects the object under inspection inspected by the X-ray inspection device.

5. The nuclear material inspection system according to claim 4, comprising a mass spectrometer that detects a hazardous substance emitted from the object under inspection.

6. A clearance device comprising:
a clearance inspection device that detects gamma rays emitted from the object under inspection; and
the nuclear material detection device according to claim 1 or 2, which inspects the object under inspection inspected by the clearance inspection device.
